# EUROPEAN PATENT APPLICATION

(11) **EP 4 742 425 A1**
(43) Date of publication of application: **13.05.2026**
(21) Application number: 25195366.7
(22) Date of filing: 12.08.2025
(51) Int. Cl.: H01M 50/533, H01M 50/54, H01M 50/553

(54) **SECONDARY BATTERY**

(30) Priority: 06.11.2024 KR 20240155984
(71) Applicant: Samsung SDI Co., Ltd., Yongin-si, Gyeonggi-do 17084 (KR)
(72) Inventor: KO, Jae Wook, Yongin-si, Gyeonggi-do 17048 (KR)
(74) Representative: Gulde & Partner

(57) **Abstract**

A secondary battery includes an electrode assembly including first electrode plates including first substrate tabs arranged in a first direction and second electrode plates including second substrate tabs arranged in a second direction that is opposite to the first direction, with the first electrode plates and the second electrode plates being provided in a stack. A case accommodates the electrode assembly, and a cap assembly includes a pair of current collector plates electrically connected to a first substrate tab and a second substrate tab, respectively, with the cap assembly sealing the case. A greater number of the first substrate tabs are provided on the first electrode plates at a center of the stack than on the first electrode plates at outer portions of the stack.

## Description

### BACKGROUND

### 1. Field

Embodiments of the present disclosure relate to a secondary battery.

### 2. Description of the Related Art

Unlike a primary battery, a secondary battery may be charged and discharged. Low-capacity secondary batteries having a single battery cell packaged in the form of a pack are widely employed in small, portable electronic devices, such as smart phones, feature phones, laptop computers, digital cameras, camcorders, and the like, while large-capacity secondary batteries are widely used as power sources for driving motors in hybrid vehicles, electric vehicles, and the like, as well as batteries for power storage. The secondary battery includes an electrode assembly consisting of a positive electrode and a negative electrode, a case that accommodates the electrode assembly, and electrode terminals connected to the electrode assembly.

The above information disclosed in this Background section is only for enhancement of understanding of the background of the invention and therefore it may contain information that does not constitute prior art.

### SUMMARY

The present invention is set out in the appended set of claims, wherein the drawings and respective description relate to advantageous embodiments thereof.

The present invention provides a secondary battery having improved reactivity in a centrally located electrode plate by varying the number of tabs of different electrode plates, thereby allowing all the electrode plates within an electrode assembly to react uniformly.

However, the technical problems to be achieved in the embodiment of the disclosure are not limited to the technical problems mentioned above, and other technical problems not mentioned herein will be clearly understood from the following description by those skilled in the art to which the disclosure belongs.

An exemplary secondary battery according to the present invention for solving the above technical problem, includes: an electrode assembly first electrode plates including first substrate tabs arranged in a first direction and second electrode plates including second substrate tabs arranged in a second direction that is opposite to the first direction, with the first electrode plates and the second electrode plates being provided in a stack; a case accommodating the electrode assembly; and a cap assembly including a pair of current collector plates electrically connected to a first substrate tab and a second substrate tab, respectively, with the cap assembly sealing the case, wherein a greater number of the first substrate tabs are provided on the first electrode plates at a center of the stack than on the first electrode plates at outer portions of the stack.

In some examples, the first substrate tabs may be provided in the center of the stack such that the first substrate tabs are densified on the center of the stack.

In some examples, the first electrode plates may be stacked so that the first substrate tabs are arranged in a rhombus shape.

In some examples, the first electrode plates in the stack include at least one first layer on an inner side, at least one second layer at the center of the stack, and at least one third layer on an outer side.

In some examples, a number of the first substrate tabs provided in the second layer is greater than a number of the first substrate tabs in the first layer and the number of the first substrate tabs provided in the second layer is greater than a number of the first substrate tabs in the third layer.

In some examples, the number of the first substrate tabs in the first layer and the number of the first substrate tabs in the third layer may be the same.

In some examples, the first substrate tabs in each of the first layer, the second layer, and the third layer may protrude to the same length from the stack.

In some examples, a current collector plate may be welded to the first substrate tabs, and the welding regions of the current collector plate may be in a rhombus shape.

In some examples, the first substrate tabs of the first layer and the third layer may protrude to the same length from the stack, and the first substrate tabs of the first layer and the third layer protrude a different length from the stack than the first substrate tabs of the second layer may protrude from the stack.

In some examples, the lengths that the first substrate tabs in the second layer protrude from the stack may be larger than the lengths the first substrate tabs in the first layer and the third layer protrude from the stack.

In some examples, the first substrate tabs may be pressed on the basis of the second layer, and the pressed first substrate tabs of the second layer may be bent and welded to a current collector plate.

In some examples, the lengths the first substrate tabs in the second layer protrude from the stack may be shorter than the lengths the first substrate tabs in the first layer and the third layer protrude from the stack.

In some examples, the first substrate tabs in the first layer, second layer, and third layer may end at the same position.

In some examples, the side surface of the stack from which the first substrate tabs of the first electrode plate protrude may have a central region and edge regions, the first substrate tabs in the second layer may be provided in the central region and the edge regions, and the first substrate tabs provided in the central region in the second layer and the first substrate tabs provided in the edge regions in the second layer may have the same protruding length or different protruding lengths.

In some examples, the first substrate tabs provided in the edge regions in the second layer may protrude longer than the first substrate tabs provided in the central region in the second layer.

In some examples, the first substrate tabs provided in the edge regions in the second layer may be bent and welded to a current collector plate.

In some examples, each of the first layer and the third layer may include a plurality of electrode plates, and more of the first substrate tabs may be disposed as toward the center of the stack.

In some examples, the case may include a bottom surface and long and short side surfaces extending upward from the bottom surface, the cap assembly may further include a first terminal plate electrically connected to the first electrode plate, and the secondary battery further comprises a first current collector plate may include a first terminal connecting portion connected to the first terminal plate and a first electrode connecting portion extending from the first terminal connecting portion parallel to the short side surface and coupled to the first electrode plate.

In some examples, each of the second electrode plates may have at least one second substrate tab, and a greater number of the second substrate tabs may be provided on the second electrode plates at the center of the stack than on the second electrode plates at outer portions of the stack.

In some examples, the outermost layer of the first electrode plates may have one first substrate tab.

According to the present disclosure, provided is a secondary battery with improved reactivity of an electrode plate located at the center of a stack of electrode plates by varying the number of tabs of the electrode plates, which allows all the electrode plates within an electrode assembly to react uniformly, thereby improving battery life and cycle performance.

However, the technical effects to be achieved in the embodiment of the disclosure are not limited to the technical problems mentioned above, and other technical effects not mentioned herein will be clearly understood from the following description by those skilled in the art to which the disclosure belongs.

### BRIEF DESCRIPTION OF DRAWINGS

The following drawings attached to this specification illustrate preferred embodiments of the present disclosure, and serve to further understand the technical idea of the present disclosure together with the detailed description of the present disclosure, and thus, the present disclosure should not be construed as being limited to the matters described in such drawings.
FIG. 1 is an exploded perspective view showing a secondary battery according to an embodiment of the present invention.
FIG. 2 is a cross-sectional view showing the secondary battery of FIG. 1.
FIG. 3 is a cross-sectional view of a side from which a tab of an electrode assembly protrudes in the secondary battery according to an embodiment of the present invention.
FIG. 4 is a perspective view of the electrode assembly in the secondary battery according to an embodiment of the present invention.
FIGS. 5 to 7 are perspective views of an electrode assembly in a secondary battery according to various embodiments of the present invention.
FIG. 8 is a side view showing a state in which a current collector plate and an electrode assembly in the secondary battery according to an embodiment of the present invention are combined.
FIG. 9 is a side view showing a state in which a current collector plate and an electrode assembly in a secondary battery according to another embodiment of the present invention are combined.
FIG. 10 is a perspective view showing a battery pack according to an embodiment of the present disclosure.
FIGS. 11 and 12 are perspective views showing battery packs according to embodiments of the present disclosure.
FIGS. 13 and 14 are, respectively, a perspective view and a side view showing a vehicle body and vehicle body parts according to embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way. In addition, for a better understanding of the invention, the attached drawings are not drawn to scale and the dimensions of some components may be exaggerated. In addition, the same reference numbers may be assigned to the same components in different embodiments.

A reference to two objects in comparison being the same means that they are substantially the same. Thus, the wording "substantially the same" may include cases where the same is considered to be a low level in the related art, for example, a deviation within 5%. In addition, when any of parameters is referred to as being uniform in a given region, it may mean that the parameter is uniform from an average perspective.

It will be understood that, although the terms "first," "second," etc., may be used herein to describe various components, these components should not be limited by these terms. These terms are used to distinguish one component from another component. Throughout the specification, the singular forms are intended to include the plural forms as well, unless the context clearly indicates otherwise.

The arrangement of an arbitrary component on the "upper portion (or lower portion)" or "upper (or lower)" of a component means that an arbitrary component is placed in contact with the upper (or lower) surface of the component. In addition, it may mean that other components may be interposed between the component and any component disposed on (or under) the component.

Also, it will be understood that when an element is referred to as being "coupled to," "linked to," or " "connected to" another element, these elements can be directly coupled or connected to each other, another intervening element may be present therebetween, or the respective elements may be coupled, linked, or connected to each other through another elements. In addition, it will be understood that when an element is referred to as being electrically coupled to another element, the element can be directly connected to another element or an intervening element may be present therebetween such that the element and another element are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

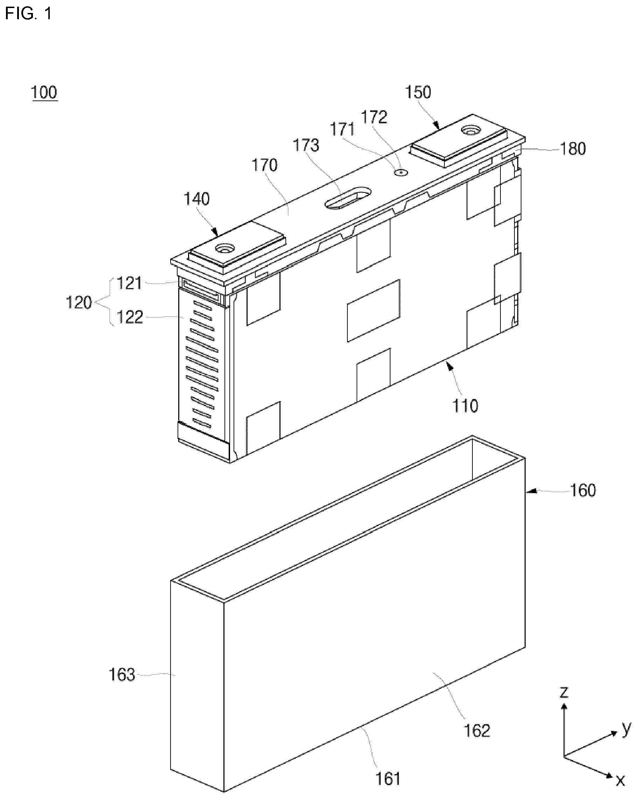

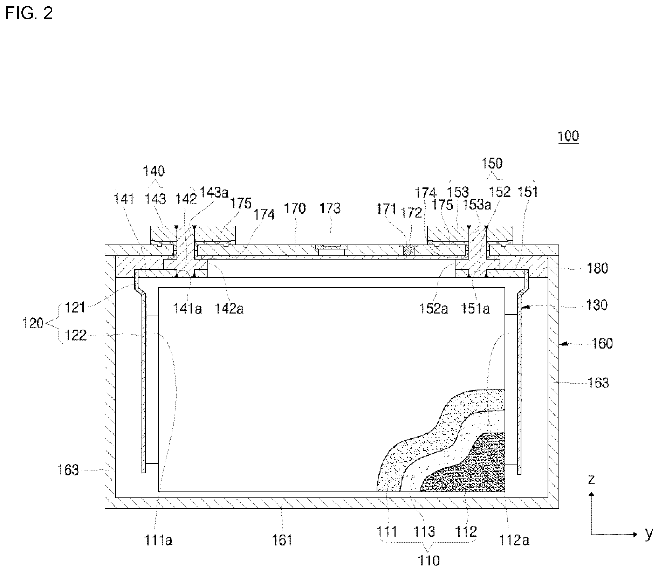

FIG. 1 is an exploded perspective view showing a secondary battery according to an embodiment of the present disclosure. FIG. 2 is a cross-sectional view showing the secondary battery of FIG. 1.

Referring to FIGS. 1 and 2, the secondary battery 100 may include an electrode assembly 110, a case 160, a cap assembly, and an insulating member 180. In some examples, the cap assembly may include a first current collector plate 120, a second current collector plate 130, a first terminal part 140, a second terminal part 150, and a cap plate 170.

The electrode assembly 110 may be formed by overlapping a first electrode plate 111, a separator 113, and a second electrode plate 112, which are formed in a thin plate shape or film shape. In some examples, the first electrode plate 111 may serve as a positive electrode, and the second electrode plate 112 may serve as a negative electrode. Of course, the opposite is also possible.

In some examples, the electrode assembly 110 may be received inside the case by stacking one or more electrode assemblies 110 adjacent to each other, and the number of electrode assemblies 110 is not limited in the present invention.

The first electrode plate 111 may be formed by applying a first electrode active material, such as graphite or carbon, to a first electrode current collector plate (or first electrode current collector) formed of a metal foil, such as aluminum or an aluminum alloy. The first electrode plate 111 may include a first active material layer coated with a first electrode active material. The first electrode plate 111 may include a first electrode uncoated portion 111a, which is an area to which the first electrode active material is not applied.

In some examples, the first electrode uncoated portion 111a may be a first substrate tab. The first substrate tab111a may be formed by cutting the first electrode plate 111 such that the tab 111a protrudes from a side of the first electrode plate 111 when manufacturing the first electrode plate 111. In another examples, the first substrate tab 111a may protrude further from a side of the first electrode plate 111 than the separator 113 without being separately cut. A plurality of first substrate tabs111a may be formed so that at least some of the tabs 111a overlap when the first electrode plates 111 are stacked to thereby form a multi-tab structure. The first substrate tabs111a may also be referred to as first current collection tabs. The first substrate tabs111a are structurally integrated with the first electrode plate 111 and are drawn out from each of the stacked first electrode plates 111, thereby increasing the current collection efficiency of the electrode assembly 110. In some examples, a plurality of first substrate tabs 111a may be provided on each electrode plate and may protrude in the same direction (e.g., a first direction) from one side of the electrode assembly 110.

As the positive electrode active material that is a first active material, a compound capable of reversibly intercalating/deintercalating lithium (e.g., a lithiated intercalation compound) may be used. Specifically, at least one of a composite oxide of lithium and a metal selected from cobalt, manganese, nickel, and combinations thereof may be used.

The composite oxide may be a lithium transition metal composite oxide, and specific examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector (e.g., a first substrate) and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

As the current collector, aluminum (Al), but not limited thereto, may be used.

The second electrode plate 112 may be formed by applying a second electrode active material, such as graphite or carbon, to a second electrode collector plate (or second electrode collector) formed from a metal foil, such as copper, copper alloy, nickel, or nickel alloy. The second electrode plate 112 may include a second active material layer on which the second electrode active material is applied. The second electrode plate 112 may include a second electrode uncoated portion 112a, which is an area to which the second electrode active material is not applied.

In some examples, the second electrode uncoated portion 112a may be a second substrate tab. The second substrate tab 112a may be formed by cutting the second electrode plate 112 such that the tab 112a protrudes from a side of the second electrode plate 112 when manufacturing the second electrode plate 112. In another examples, the second substrate tab 112a may protrude further from a side of the second electrode plate 112 than the separator 113 without being separately cut. A plurality of the second substrate tabs 112a may be formed so that at least some of the tabs 112a overlap when the second electrode plates 112 are stacked to thereby form a multi-tab structure. The second substrate tabs 112a may also be referred to as a second current collection tabs. The second substrate tabs 112a are structured to be integrally formed with the second electrode plate 112 and are drawn out from each of the stacked second electrode plates 112, thereby increasing the current collection efficiency of the electrode assembly 110. In some examples, a plurality of second substrate tabs 112a may be provided on each electrode plate and may protrude in the same direction (e.g., a second direction) from a side of the electrode assembly 110 that is opposite to the side that the first substrate tabs 111a protrude from.

The negative electrode active material that is a second active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. For example, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

The separator 113 is interposed between the first electrode plate 111 and the second electrode plate 112 to prevent an electrical circuit therebetween.

Depending on the type of lithium secondary battery, a separator may be present between the first electrode plate (e.g., the positive electrode) and the second electrode plate (e.g., the negative electrode). As the separator, polyethylene, polypropylene, polyvinylidene fluoride, or a multilayer film of two or more layers thereof may be used.

The separator 113 may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are stacked on each other.

The first current collector plate 120 and the second current collector plate 130 electrically connected to the first electrode plate 111 and the second electrode plate 112, respectively, are positioned at both ends of the electrode assembly 110.

The first current collector plate 120 is made of a metal (e.g., aluminum) and may be electrically connected to the first electrode plate 111. The first current collector plate 120 may be located on one side of the electrode assembly 110 and may be connected to the first electrode-uncoated portion 111a by welding. In some examples, a plurality of first electrode-uncoated portions 111a may be bent in one direction and laser welded to the first current collector plate 120. The structure of the first current collector plate 120 will be described in more detail below.

The second current collector plate 130 is made of a metal (e.g., copper) and may be electrically connected to the second electrode plate 112. The second current collector plate 130 may be located on the other side of the electrode assembly 110 and may be connected to the second electrode-uncoated portion 112a by welding. A plurality of second electrode-uncoated portions 112a may be bent in one direction and laser welded to the second current collector plate 130.

The first terminal part 140 may be electrically connected to the first current collector plate 120. The first terminal part 140 may include a connection plate 141, a terminal pillar 142, and a terminal plate 143.

The connection plate 141 is positioned above the electrode assembly 110 and may be electrically connected to the first current collector plate 120. The connection plate 141 may be formed perpendicular to the first current collector plate 120. The connection plate 141 may include a hole 141a to which the terminal pillar 142 is coupled. In some examples, the connection plate 141 may be integrally formed with the first current collector plate 120 or may be a part of the first current collector plate 120.

The terminal pillar 142 may have a lower portion coupled to the hole 141a of the connection plate 141 and an upper portion penetrating the cap plate 170 and protruding upward from the cap plate 170. A flange 142a extending laterally may be formed below the terminal pillar 142 so as to prevent the cap plate 170 from falling out of the cap plate 170. In some examples, the terminal pillar 142 may be electrically connected to the cap plate 170.

The terminal plate 143 may include a hole 143a to which the terminal pillar 142 is coupled. The terminal plate 143 may be coupled to the upper portion of the terminal pillar 142 protruding above the cap plate 170. In some examples, the terminal pillar 142 may be coupled to the hole 143a of the terminal plate 143 and riveted and/or welded.

The second terminal part 150 is electrically connected to the second current collector plate 130 and may have the same shape as the first terminal part 140. The second terminal part 150 may include a connection plate 151, a terminal pillar 152, and a terminal plate 153.

The connection plate 151 is positioned above the electrode assembly 110 and may be electrically connected to the second current collector plate 130. The connection plate 151 may be formed perpendicular to the second current collector plate 130. The connection plate 151 may include a hole 151a to which the terminal pillar 152 is coupled. In some examples, the connection plate 151 may be integrally formed with the second current collector plate 130 or may be a part of the second current collector plate 130.

The terminal pillar 152 may have a lower portion coupled to the hole 151a of the connection plate 151 and an upper portion penetrating the cap plate 170 and protruding upward from the cap plate 170. A flange 152a extending laterally may be formed below the cap plate 170 so as to prevent the terminal pillar 152 from falling out of the cap plate 170. In some examples, the terminal pillar 152 may be electrically isolated from cap plate 170.

The terminal plate 153 may include a hole 153a to which the terminal pillar 152 is coupled. The terminal plate 153 may be coupled to the upper portion of the terminal pillar 152 protruding above the cap plate 170. In some examples, the terminal pillar 152 may be coupled to the hole 153a of the terminal plate 153 and riveted and/or welded.

The case 160 may be made of a conductive metal such as aluminum, an aluminum alloy, or nickel-plated steel. The case 160 may be shaped of a substantially hexahedron having an opening into which the electrode assembly 110 can be inserted and seated. For example, the case 160 may include a bottom surface 161, and a pair of long side surfaces 162, and a pair of short side surfaces 163 extending upward from the bottom surface 161. Here, the long side surface 162 may refer to a surface having a relatively larger area than the short side surface 163. The cap plate 170 may be coupled to the opening of the case 160 to seal the case 160. The inner surface of the case 160 is basically insulated to prevent an electrical short circuit from occurring inside. In addition, in some cases, one electrode of the electrode assembly 110 may be electrically connected to the case 160 through the cap plate 170. Even in this case, an electrical short circuit inside the case 160 can be prevented by the insulation process inside the case 160. For example, the case 160 may act as a positive electrode.

The cap plate 170 may be coupled to the case 160. The cap plate 170 seals the opening of the case 160 and may be made of the same material as the case 160. In some examples, the cap plate 170 may be coupled to the case 160 by laser welding. Here, since the cap plate 170 may have the same polarity as that of the first terminal part 140 as described above, the cap plate 170 and the case 160 may have the same polarity. The cap plate 170 may include an electrolyte injection hole 171, a plug 172, a safety vent 173, a gasket 174, and a coupling member 175.

The electrolyte injection hole 171 may be formed through the cap plate 170. The electrolyte injection hole 171 is a hole for injecting electrolyte into the case 160. The plug 172 may be coupled to the electrolyte injection hole 171. That is, the electrolyte injection hole 171 may be sealed by the plug 172 after the electrolyte is injected.

The safety vent 173 may be formed at a substantially central portion of the cap plate 170. The safety vent 173 may be formed to be relatively thinner than the thickness of the cap plate 170. In addition, a notch may be formed in the safety vent 173 so as to be opened at a set pressure. In some examples, when the pressure inside the case 160 exceeds the set pressure due to overcharging of the secondary battery 100, the notch is ruptured and the gas inside the case 160 is discharged to the outside through the safety vent 173. Ignition or explosion of the secondary battery 100 can be prevented.

The gasket 174 may be made of an insulating material. The gasket 174 is formed between the terminal pillars 142 and 152 and the cap plate 170 at a lower portion of the cap plate 170 to seal portions between the terminal pillars 142 and 152 and the cap plate 170. The gasket 174 may prevent external moisture from penetrating into the secondary battery 100 or may prevent an electrolyte contained in the secondary battery 100 from leaking to the outside.

The coupling member 175 may be formed between the terminal plates 143 and 153 and the cap plate 170 at an upper portion of the cap plate 170. In addition, the coupling member 175 may come into close contact with the gasket 174 and the cap plate 170. In some examples, the coupling member 175 formed on the terminal pillar 142 may electrically connect the cap plate 170 and the first terminal part 140 to each other, and the coupling member 175 formed on the terminal pillar 152 may insulate the cap plate 170 and the second terminal part 150 from each other.

The insulating member 180 is formed below the cap plate 170 to prevent an unnecessary short circuit between the first and second current collector plates 120 and 130 (or the connection plates 141 and 151) and the cap plate 170.

Each electrode plate includes a protruding rectangular current collector that is not coated with a mixture, called an uncoated portion. This structure transfers electrons to an active material within the mixture by transferring or accepting electrons through an external circuit, causing the electrons and lithium ions to react within the active material. In an electrode assembly composed of multiple stacked layers, the reactivity between an active material and lithium ions is in a layer towards the center is relatively inferior to that of an electrode plate located at the outer portion of the electrode assembly during a battery cycle. When a cell is disassembled and the state of an electrode plate is checked, it is confirmed that the amount of precipitates gradually increases as toward the center.

In some embodiments, electrochemical reactivity is improved by gradually increasing the number of tabs in centrally located electrode plates of the secondary battery 100 to facilitate electron movement. In some examples of the secondary battery 100, a number of tabs of the electrode assembly 110 that are provided is greater in the center than in the outer portion of the electrode plate, so that electrochemical reactivity can be improved. By increasing the number of electrode plate tabs in the center of the electrode assembly 110, the electrochemical reactivity of all electrode plates can be made uniform as compared to conventional electrode assemblies having the same number of tabs through the electrode plates. For example, in some embodiments the secondary battery 100 may include an electrode assembly 110 having electrode plates with one tab at the outermost electrode plate, and the number of tabs increases in the electrode plates towards the center of the electrode assembly. This structure can be applied to all electrode plates, i.e., both positive electrode plates and negative electrode plates, or can be applied to only one type of electrode plate, i.e., either the positive electrode plate or the negative electrode plate. For convenience, the following explanation will be made with respect to the first electrode plate 111. But the descriptions may be equally applied to the second electrode plate 112, though descriptions with respect to the second electrode plate will be omitted.

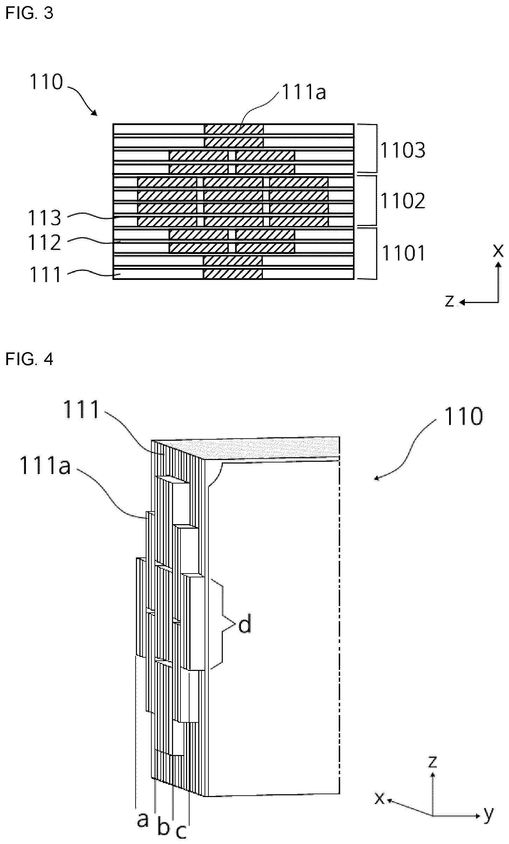

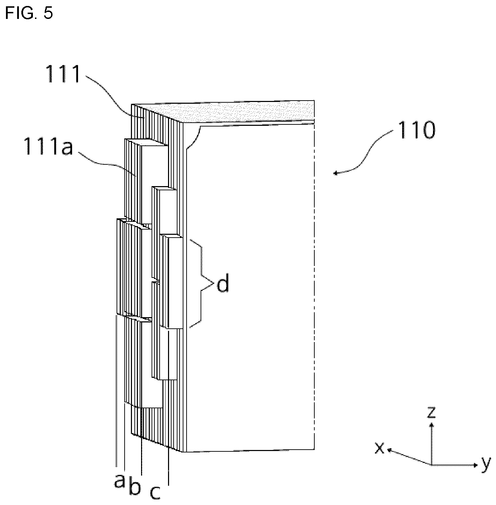

FIG. 3 is a cross-sectional view of a side from which tabs of an electrode assembly protrude in the secondary battery according to an embodiment of the present disclosure. FIG. 4 is a perspective view of the electrode assembly in the secondary battery according to an embodiment of the present disclosure. FIGS. 5 to 7 are perspective views of an electrode assembly in a secondary battery according to various embodiments of the present disclosure. In some examples, the electrode assembly 110 may be stacked in a Z stack manner in which the first electrode plate 111 and the second electrode plate 112 are stacked with the separator 113 therebetween.. For convenience, the second electrode plate 112 and the separator 113 may be shown rather reduced or omitted in the drawing.

Referring to FIGS. 3 and 4, the secondary battery 100 according to an embodiment of the present disclosure may include an electrode assembly 110 stacked in a state in which the separator 113 is interposed between a plurality of first electrode plates 111 having first substrate tabs 111a arranged in one direction and a plurality of second electrode plates 112 to form a stack.

In some examples, each of the plurality of first electrode plates 111 may have at least one first substrate tab 111a. A greater number of the first substrate tabs 111a may be most provided on the first electrode plate 111 stacked at the center of the stack of the first electrode plates 111 (x-direction in FIG. 3). For example, 16 first substrate tabs 111a may be provided at the center of stack, and 12 first substrate tabs 111a may be provided in other portions of the stack. In some examples, the first substrate tabs 111a may be provided in the central region so that the first substrate tab 111a are densified on the central region. In an embodiment, the first substrate tabs 111a may be provided in the center of the stack such that the first electrode plates 111 are densified in the center of the stack. In the example depicted in FIGS. 3 and 4, the plurality of electrode plates 111, 112 may be stacked so that the first substrate tabs 111a are arranged in a rhombus shape.

In some examples, with respect to the direction of the stack, the plurality of first electrode plates 111 may include at least one first layer 1101 stacked on the a first side of the center of the stack, at least one second layer 1102 stacked on the center of the stack, and at least one third layer 1103 stacked on a second side (see FIG. 3). In some examples, each of the first layer and the third layer may include a plurality of electrode plates, and a greater number of substrate tabs may be disposed as toward the center. In some examples, the outermost layer of the plurality of first electrode plates may include one first substrate tab.

Referring to FIG. 4, the first layer 1101 is denoted by 'a', the second layer is denoted by 'b', and the third layer is denoted by 'c'. In addition, in some examples, in the width direction (z-direction of FIG. 4), each of the plurality of first electrode plates 111 may include a central region as indicated by 'd' in FIG. 4 and edge regions at both sides of the central region. In an embodiment, the first electrode plates 111 in the stack may include at least one first layer 1101) on an inner side, at least one second layer 1102 at the center of the stack, and at least one third layer 1103 on an outer side.

In some examples, more of the first substrate tabs 111a are provided in the second layer 1102 than in the first layer 1101 and the third layer 1103. In an embodiment, a number of the first substrate tabs 111a provided in the second layer 1102 is greater than the number of first substrate tabs 111a in the first layer 1101, and the number of first substrate tabs 111a provided in the second layer 1102 is greater than the number of first substrate tabs 111a in the third layer 1103.In further examples, the number of the first substrate tabs 111a in the first layer 1101 and the number of the first substrate tabs 111a in the third layer 1103 are the same. In still further examples, more substrate tabs may be disposed toward the center of the stack.

Referring to FIG. 4 the first substrate tabs 111a of each of the first layer 1101, the second layer 1102, and the third layer 1103 may protrude to the same length from the stack. In some examples, the first substrate tabs 111a may be pressed on the basis of the second layer 1102. Because the first substrate tabs 111a are densified in the central region d, the first substrate tabs 111a may be pressed in an approximately rhombus shape even when being pressed.

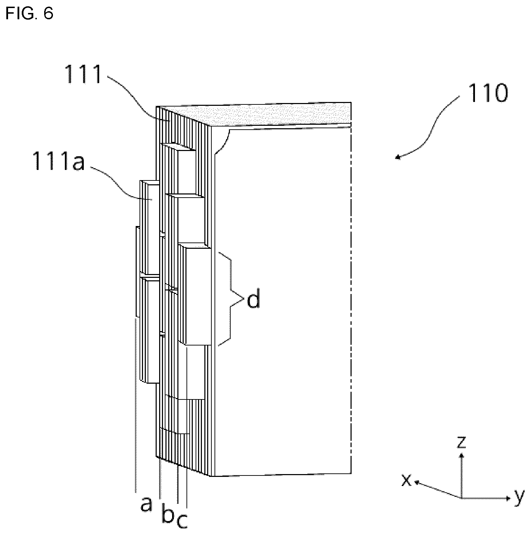

Referring to FIGS. 5 and 6, in some examples, the first substrate tabs 111a of each of the first layer 1101 and the third layer 1103 may protrude the same length from the stack. In some examples, the first substrate tabs 111a of the first layer 1101 and the third layer 1103 may protrude a different length from the stack than the first substrate tabs 111a of the second layer 1102 protrude from the stack. In further examples, the first substrate tabs 111a of each of the first layer 1101, the second layer 1102, and the third layer 1103 may protrude to the same length.

Referring to FIG. 5, in yet another examples, the protruding lengths of the first substrate tabs of the second layer are longer than the protruding lengths of the first substrate tabs of each of the first layer and the third layer. In some examples, the first substrate tabs may be pressed on the basis of the second layer, and the pressed first substrate tabs of the second layer may be bent to one side to be welded to the current collector plate.

Referring to FIG. 6, in some examples, the protruding lengths of the first substrate tabs of the second layer may be shorter than the protruding lengths of the first substrate tabs of each of the first layer and the third layer. In some examples, the first substrate tabs may be pressed on the basis of the second layer, and the respective pressed first substrate tabs of the first layer, second layer, and third layer may have the same end position.

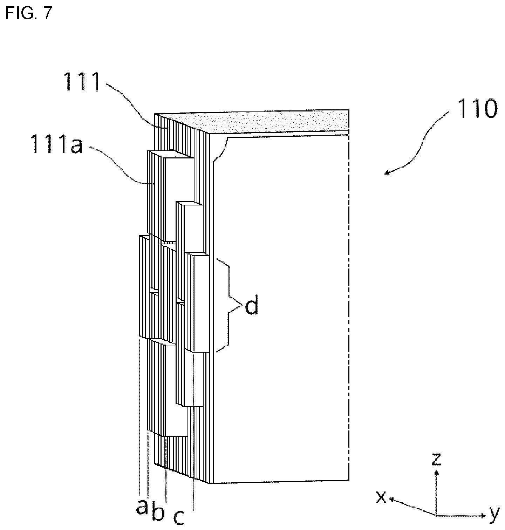

Referring to FIG. 7, in some examples, the side surface of the stack from which the first substrate tabs of the first electrode plate protrude may have a central region and edge regions, the first substrate tabs of the second layer may be provided in the central region and the edge regions, and the first substrate tabs provided in the central region in the second layer and the first substrate tabs provided in the edge regions in the second layer have the same protruding length or different protruding lengths. In other examples, the first substrate tabs provided in the edge regions in the second layer protrude longer than the first substrate tabs provided in the central region in the second layer.

In some examples, the first substrate tabs may be pressed on the basis of the second layer, and the pressed first substrate tabs provided in the edge regions of the second layer may be bent to one side to be welded to the current collector plate.

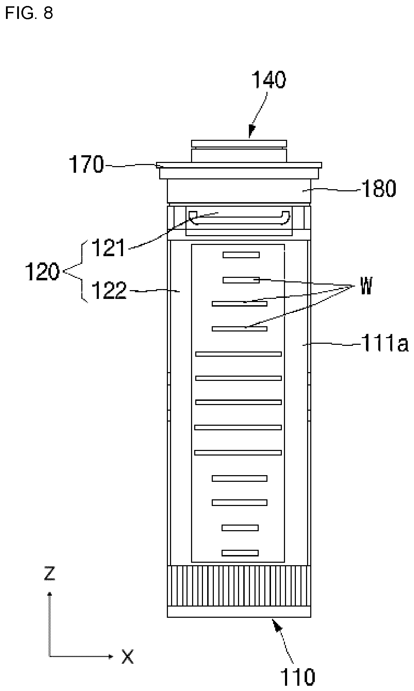

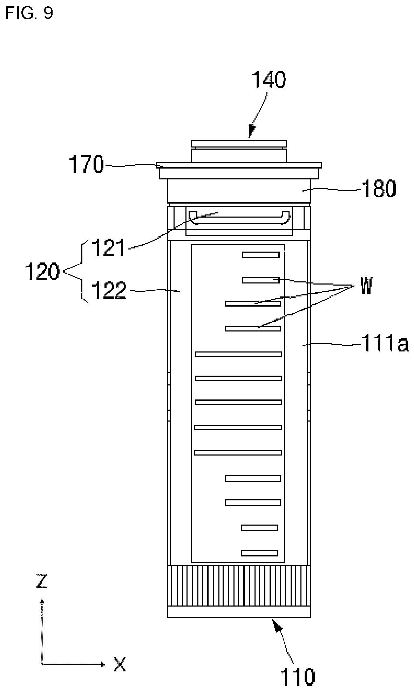

FIG. 8 is a side view showing a state in which a current collector plate and an electrode assembly of the secondary battery according to an embodiment of the present disclosure are combined. FIG. 9 is a side view showing a state in which a current collector plate and an electrode assembly of a secondary battery according to another embodiment of the present disclosure are combined. In the present disclosure, the first current collector plate 120 and the second current collector plate 130 have the same structure. Therefore, the following description will be made with respect to only the first current collector plate 120. In addition, the first current collector plate 120 may be referred to as a current collector plate.

Referring to FIGS. 8 and 9, the first current collector plate 120 may include a first terminal connecting portion 121 and a first electrode connecting portion 122. The first electrode connecting portion 122 may include a side that contacts the first substrate tabs111a and a surface opposite thereto that faces a short side surface 163 of the case 160. The first electrode connecting portion 122 may be positioned parallel to the short side surface 163 of the case 160.

The first terminal connecting portion 121 is a portion coupled to the connection plate 141 and may be located at the upper end of the first current collector plate 120. In some examples, the first terminal connecting portion 121 may be electrically connected to the connection plate 141 by welding. In other examples, the first terminal connecting portion 121 may be integrally formed with the connection plate 141. Welding may be unnecessary between the first terminal connecting portion 121 and the connection plate 141. The first terminal connecting portion 121 may protrude toward the short side surface 163 of the case 160 compared to the first electrode connecting portion 122.

The first electrode connecting portion 122 is a portion that is connected to the first substrate tabs111a, and may additionally include portions where the first substrate tabs111a are laser-welded. The first electrode connecting portion 122 may be formed in a rhombus shape so that a laser-welded portion W protrudes to one side of the first electrode plate 111 and may be welded to the first substrate tabs 111a arranged in a rhombus shape. The first electrode connecting portion 122 may be positioned closer to the electrode assembly 110 than the first terminal connecting portion 121. That is, a step may be formed between the first terminal connecting portion 121 and the first electrode connecting portion 122. With this configuration, by positioning the first electrode connecting portion 122 close to the electrode assembly 110, the inner space of the case 160 can be better utilized, and the capacity of the electrode assembly 110 can be increased per volume.

Referring to FIGS. 8 and 9, the first current collector plate 120 and the first substrate tabs111a may be coupled by laser welding. The welding regions W may be formed in the form of multiple lines by the laser beam irradiated onto the first electrode connecting portion 122.

In some examples, the first substrate tabs111a may be pressed on the basis of the second layer 1102. The pressed first substrate tabs 111a of the second layer 1102 may be bent and welded to one of the current collector plates (120, 130). For example, a plurality of substrate tabs arranged in multiple layers may be pressed toward the center from both sides. As described above, the first current collector plate 120 may be welded to the pressed first substrate tabs 111a, and the welding regions W of the current collector plate 120 may be in a rhombus shape corresponding to the shape of the pressed first substrate tabs 111a.

In some examples, as shown in FIG. 4, the protruding lengths of the first substrate tabs 111a in each of the first layer 1101, the second layer 1102, and the third layer 1103 may all be the same. Since the protruding lengths are all the same, the welding regions may be formed corresponding to the shape in which the first substrate tabs 111a protrude when the first electrode connecting portion 122 is in contact therewith, as shown in FIG. 8.

In other examples, as shown in FIG. 5, the protruding lengths of the first substrate tabs 111a in the second layer 1102 may be larger than the protruding lengths of the first substrate tabs 111a in each of the first layer 1101 and the third layer 1103. Since the protruding lengths of the substrate tabs 111a in the center are larger than the substrate tabs 111a on both sides, when pressed toward the central axis, the substrate tabs 111a on the central axis may protrude longer than the substrate tabs 111a on both sides. By bending the substrate tabs 111a towards the central axis in one direction and bringing the substrate tabs 111a into close contact with the first electrode connecting portion 122, and by irradiating a laser beam to the opposite surface of a surface where the substrate tabs 111a are brought into contact with the first electrode connecting portion 122, the first substrate tabs 111a may be electrically connected to the first current collector plate 120. Here, the welding regions W may be in an approximately rectangular shape.

In still other examples, the protruding lengths of the first substrate tabs 111a of the second layer 1102 may be shorter than the protruding lengths of the first substrate tabs111a in each of the first layer 1101 and the third layer 1103 (see FIG. 6). In an embodiment, the first substrate tabs 111a in the first layer, the second layer 1102, and the third layer 1103 end at the same position.

Since the protruding lengths of the substrate tabs 111a on both sides are longer than the protruding lengths of the substrate tabs111a in the center, when pressed toward the central axis, the long substrate tabs 111a on both sides are partially bent and gathered toward the center axis. Thus, the pressed first substrate tabs 111a may have the same end position. In some examples, since the ends of the first substrate tabs 111a are the same, welding regions may be formed corresponding to the shape in which the pressed first substrate tabs 111a protrude when the first electrode connecting portion 122 is in contact therewith, as shown in FIG. 8.

The first substrate tabs 111a provided in the edge regions of the second layer 1102 may protrude longer than the first substrate tabs 111a provided in the central region d, as shown in FIG. 7. For example, the first substrate tabs 111a at the edge regions where the first substrate tabs 111a are least may be longest. In some examples, the first substrate tabs 111a are pressed on the basis of the second layer 1102, and the pressed first substrate tabs 111a provided in the edge regions of the second layer 1102 may be bent to one side and welded to the first current collector plate 120. In an embodiment, the first substrate tabs 111a provided in the edge regions in the second layer 1102 may be bent and welded to one of the current collector plates 120, 130.

The first substrate tabs 111a in the edge regions where the first substrate tabs 111a are longest may be bent to one side when pressed by the first current collector plate 120. For example, by bending the substrate tabs 111a of the edge regions in one direction so that the substrate tabs 111a are brought into contact with the first electrode connecting portion 122, and a laser beam is irradiated to the opposite side of the surface where the substrate tabs 111a are brought into contact with the first electrode connecting portion 122, the first substrate tabs 111a may be electrically connected to the first current collector plate 120. Here, the welding regions W may be biased to approximately the bending direction, as shown in FIG. 9.

With respect to the first substrate tabs 111a that protrude the longest, in some example by bending a plurality of first substrate tabs 111a in one direction so that the tabs 111a are brought into contact with the first electrode connecting portion 122, and a laser beam is irradiated to the opposite surface of the surface where the substrate tabs 111a are brought into contact with the first electrode connecting portion 122, the first substrate tabs 111a may be electrically connected to the first current collector plate 120. In some examples, when the plurality of first substrate tabs 111a are bent in one direction, the bent portions may first protrude outward from the first electrode connecting portion 122, and the protruding portions may be bent again to come into contact with the outer side surface (i.e., the case side) of the first electrode connecting portion 122.

As described above, in the present disclosure, the reactivity of an electrode plate located in the center of an electrode assembly can be improved by varying the numbers of tabs of the respective electrode plates, thereby allowing all electrode plates in the electrode assembly to react uniformly. When the numbers of tabs are the same, a side reaction of the electrode plate located in a center is slightly increased compared to the electrode plate located in the outer side of the electrode assembly. However, in the present disclosure, the reactions of electrode plates in the outer and centers of the electrode assembly are made uniform, thereby improving the battery life and cycle performance.

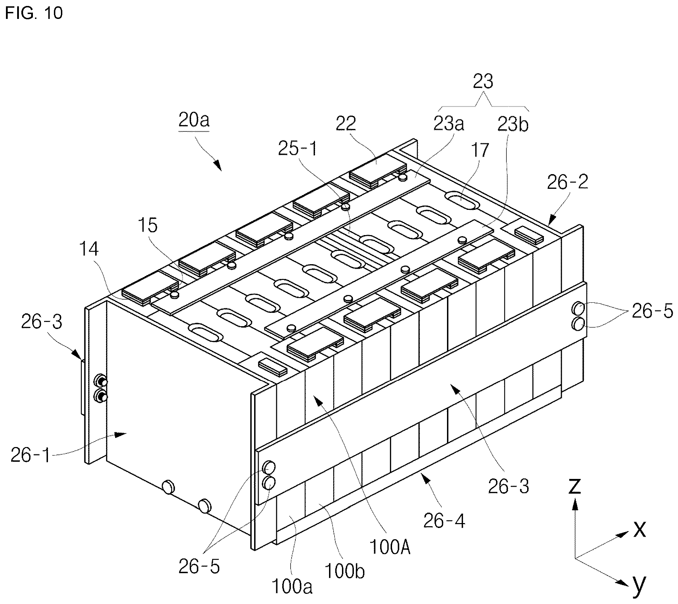

FIG. 10 is a perspective view illustrating a battery module 20a according to one or more embodiments of the present disclosure. Referring to FIG. 10, the battery module 20a according to one or more embodiments of the present disclosure includes terminal parts 14 and 15, a plurality of battery cells 100A arranged in one direction, a connection tab 22 connecting a battery cell 100a to an adjacent battery cell 100b, and a protection circuit module 23 having one end connected to the connection tab 22. The protection circuit module 23 may include a battery management system (BMS). Further, the connection tab 22 may include a body portion in contact with the terminal parts 14 and 15 between the adjacent battery cells 100a and 100b and an extension portion extending from the body portion and connected to the protection circuit module 23. The connection tab 22 may be, for example, a bus bar.

Each battery cell 100A may include a battery case, an electrode assembly received (or accommodated) in the battery case, and an electrolyte. The electrode assembly and the electrolyte react electrochemically to store and release (e.g., generate) energy. The terminal parts 14 and 15 electrically connected to the connection tab 22 and a vent 17 as a discharge passage for gas generated inside the battery case may be provided on one side of (e.g., an upper side of) the battery cell 100A. The terminal parts 14 and 15 of the battery cell 100A may be a positive electrode terminal 14 and a negative electrode terminal 15 having different polarities from each other, and the terminal parts 14 and 15 of the adjacent battery cells 100a and 100b may be electrically connected to each other in series or parallel by the connection tab 22, to be described in more detail below. Although a serial connection has been described as an example, the connection structure is not limited thereto, and various connection structures may be employed as desired or necessary. In addition, the number and arrangement of battery cells is not limited to the structure shown in FIG. 10 and may be changed as desired or necessary.

The plurality of battery cells 100A may be arranged in (e.g., may be stacked in) one direction so that the wide surfaces of the battery cells 100A face each other, and the plurality of battery cells 100A may be fixed by the housings 26-1, 26-2, 26-3, and 26-4. The housings 26-1, 26-2, 26-3, and 26-4 may include a pair of end plates 26-1 and 26-2 facing the wide surfaces of the battery cell 100A and a side plate 26-3 and a bottom plate 26-4 connecting the pair of end plates 26-1 and 26-2 to each other. The side plate 26-3 may support side surfaces of the battery cells 100A, and the bottom plate 26-4 may support bottom surfaces of the battery cells 100A. In addition, the pair of end plates 26-1 and 26-2, the side plate 26-3 and the bottom plate 26-4 may be connected by bolts 26-5 and/or any other suitable fastening members and methods known to those of ordinary skill in the art.

The protection circuit module 23 may have electronic components and protection circuits mounted thereon and may be electrically connected to connection tabs 22, to be described in more detail later. The protection circuit module 23 includes a first protection circuit module 23a and a second protection circuit module 23b extending along the direction in which the plurality of battery cells 100A are arranged in different locations. The first protection circuit module 23a and the second protection circuit module 23b may be spaced from each other at a suitable interval (e.g., a predetermined interval) and arranged parallel to each other to be electrically connected to adjacent connection tabs 22, respectively. For example, the first protection circuit module 23a extends on one side of the upper portion of the plurality of battery cells 100A along the direction in which the plurality of battery cells 100A are arranged, and the second protection circuit module 23b extends to the other upper side of the plurality of battery cells 100A along the direction in which the plurality of battery cells 100A are arranged. The second protection circuit module 23b may be spaced from the first protection circuit module 23a at a suitable interval (e.g., a predetermined interval) with the vents 17 interposed therebetween but may be disposed parallel to the first protection circuit module 23a. As such, the two protection circuit modules are spaced from each other side-by-side along the direction in which the plurality of battery cells 100A are arranged, thereby reducing or minimizing the area of the printed circuit board (PCB) constituting the protection circuit module. By separately configuring the protection circuit module into two protection circuit modules, unnecessary PCM area can be reduced or minimized. In addition, the first protection circuit module 23a and the second protection circuit module 23b may be connected to each other by a conductive connection member 25-1. One side of the conductive connection member 25-1 is connected to the first protection circuit module 23a, and the other side thereof is connected to the second protection circuit module 23b so that the two protection circuit modules 23a and 23b can be electrically connected with each other.

The connection may be performed by any one of soldering, resistance welding, laser welding, projection welding and/or any other suitable connection methods known to those of ordinary skill in the art.

In addition, the connection member 25-1 may be, for example, an electric wire. In addition, the connection member 25-1 may be made of a material having elasticity or flexibility. By the connecting member 25-1, it may be possible to check and manage whether the voltage, temperature, and/or current of the plurality of battery cells 100A are normal. For example, the information received by the first protection circuit module from connection tabs adjacent to the first protection circuit module, such as voltage, current, and/or temperature, and the information received from connection tabs adjacent to the second protection circuit module, such as voltage, current, and/or temperature, may be integrated and managed by the protection circuit module through the connection member 25-1.

In addition, when the battery cell 100A swells, shocks may be absorbed by the elasticity or flexibility of the connection member 25-1, thereby preventing the first and second protection circuit modules 23a and 23b from being damaged.

In addition, the shape and structure of the connection member 25-1 is not limited to the shape and structure shown in FIG. 10.

As described above, because the protection circuit module 23 is provided as the first and second protection circuit modules 23a and 23b, the area of the PCB constituting the protection circuit module can be reduced or minimized, and the space inside the battery module can be secured, which improves work efficiency by facilitating a fastening work for connecting the connection tab 22 and the protection circuit module 23 and repair work if (or when) an abnormality is detected in the battery module.

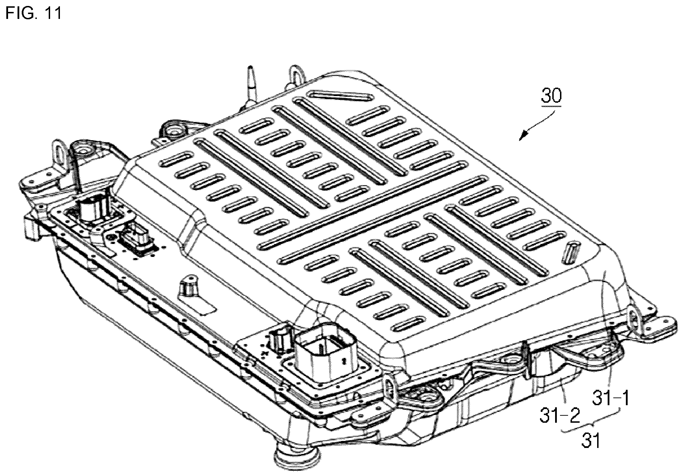

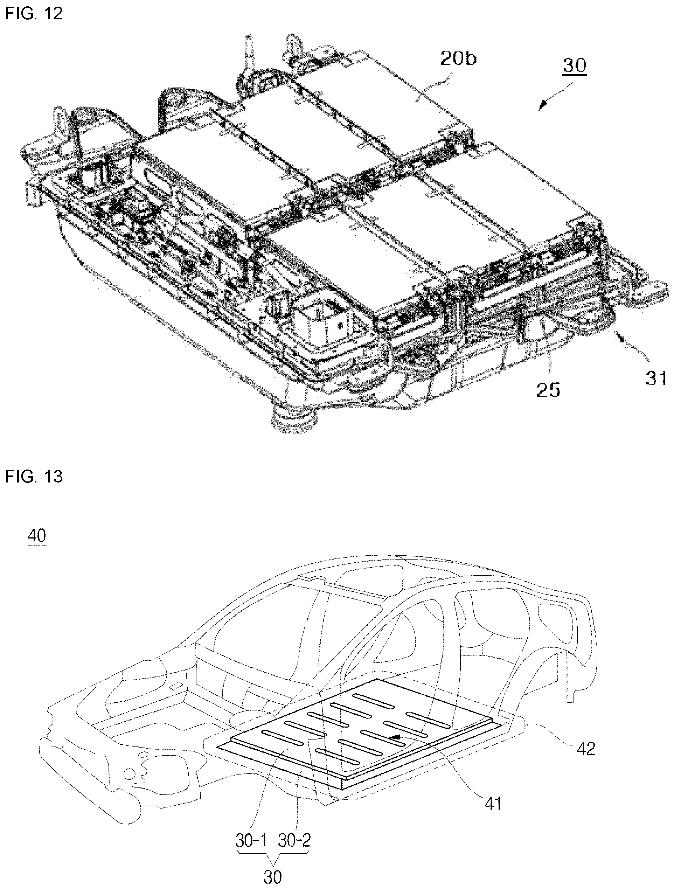

FIGS. 11 and 12 illustrate perspective views of an example of a battery pack 30. The battery pack 30 may include a plurality of battery modules 20b and a housing 31 for accommodating the plurality of battery modules 20b. For example, the housing 31 may include first and second housings 31-1 and 31-2 coupled in opposite directions through the plurality of battery modules 20b. The plurality of battery modules 20b may be electrically connected to each other by using a bus bar 25-1, and the plurality of battery modules 20b may be electrically connected to each other in a series/parallel or series-parallel mixed method, thereby obtaining desired (e.g., required) electrical output.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, overcharge, over-current protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

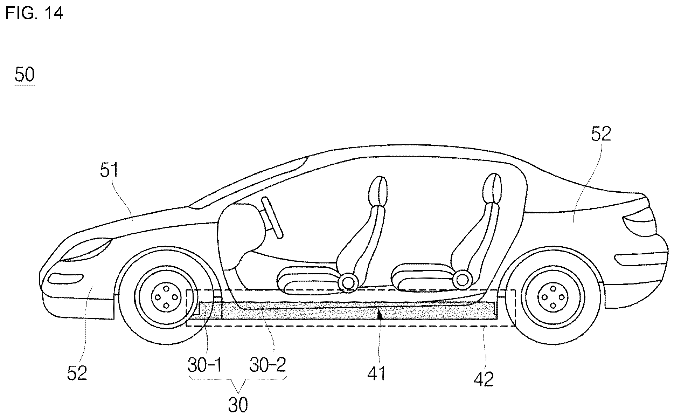

FIGS. 13 and 14 illustrate perspective and side views of examples of a vehicle body 40 and a vehicle components.

In FIG. 13, a battery pack 30 may include a battery pack cover 30-1, which is a part of a vehicle underbody 41, and a pack frame 30-2 located under the vehicle underbody 41. In some examples, the battery pack cover 30-1 may correspond to the first housing 31-1, and the pack frame 30-2 may correspond to the second housing 31-2. The pack frame 30-2 and the battery pack cover 30-1 may be integrally formed with a vehicle floor 42. The vehicle underbody 41 separates the inside and outside of a vehicle, and the pack frame 30-2 may be located outside the vehicle.

Referring to FIG. 14, a vehicle 50 may be formed by combining additional parts, such as a hood 51 in front of the vehicle and fenders 52 respectively located in the front and rear of the vehicle to a vehicle body 40.

The vehicle 50 may include the battery pack 30 that include the battery pack cover 30-1 and the pack frame 30-2, and the battery pack 30 may be coupled to the vehicle body 40.

## Claims

1. A secondary battery (100) comprising:
an electrode assembly (110) including first electrode plates (111) including first substrate tabs (111a) arranged in a first direction and second electrode plates (112) including second substrate tabs (112a) arranged in a second direction that is opposite to the first direction, with the first electrode plates (111) and the second electrode plates (112) being provided in a stack;
a case (160) accommodating the electrode assembly (110); and
a cap assembly including a pair of current collector plates (120, 130) electrically connected to the first substrate tab (111a) and the second substrate tab (112a), respectively, with the cap assembly sealing the case (160),
wherein a greater number of the first substrate tabs (111a) are provided on the first electrode plates (111) at a center of the stack than on the first electrode plates (111) at outer portions of the stack.

2. The secondary battery (100) as claimed in claim 1, wherein the first substrate tabs (111a) are provided in the center of the stack such that the first substrate tabs (111a) are densified in the center of the stack.

3. The secondary battery (100) as claimed in claim 1 or 2, wherein the electrode plates (111, 112) are stacked so that the first substrate tabs (111a) are arranged in a rhombus shape.

4. The secondary battery (100) as claimed in any of claims 1 to 3, wherein the first electrode plates (111) in the stack include at least one first layer (1101) on an inner side, at least one second layer (1102) at the center of the stack, and at least one third layer (1103) on an outer side.

5. The secondary battery (100) as claimed in claim 4, wherein a number of the first substrate tabs (111a) provided in the second layer (1102) is greater than a number of the first substrate tabs (111a) in the first layer (1101), and the number of the first substrate tabs (111a) provided in the second layer (1102) is greater than a number of the first substrate tabs (111a) in the third layer (1103).

6. The secondary battery (100) as claimed in claim 4 or 5, wherein the number of the first substrate tabs (111a) in the first layer (1101) and the number of the first substrate tabs (111a) in the third layer (1103) are the same.

7. The secondary battery (100) as claimed in claim 4 or 5, wherein the first substrate tabs (111a) of each of the first layer (1101), the second layer (1102), and the third layer (1103) protrude a same length from the stack.

8. The secondary battery (100) as claimed in claim 7, wherein one of the current collector plates (120, 130) is welded to the first substrate tabs (111a), and welding regions of the current collector plate (120, 130) are in a rhombus shape.

9. The secondary battery (100) as claimed in claim 4 or 5, wherein the first substrate tabs (111a) of the first layer (1101) and the third layer (1103) protrude a same length from the stack, and the first substrate tabs (111a) of the first layer (1101) and the third layer (1103) protrude a different length from the stack than the first substrate tabs (111a) of the second layer (1102) protrude from the stack.

10. The secondary battery (100) as claimed in claim 4, wherein lengths that the first substrate tabs (111a) in the second layer (1102) protrude from the stack are larger than lengths the first substrate tabs (111a) in the first layer (1101) and the third layer (1103) protrude from the stack.

11. The secondary battery (100) as claimed in claim 9, wherein lengths the first substrate tabs (111a) in the second layer (1102) protrude from the stack are shorter than lengths the first substrate tabs (111a) in the first layer (1101) and the third layer (1103) protrude from the stack.

12. The secondary battery (100) as claimed in claim 4 or 5, wherein a side surface of the stack from which the first substrate tabs (111a) of the first electrode plates (111) protrude has a central region and edge regions, the first substrate tabs (111a) in the second layer (1102) are provided in the central region and the edge regions, and the first substrate tabs (111a) provided in the central region in the second layer (1102) and the first substrate tabs (111a) provided in the edge regions in the second layer (1102) have the same protruding length or different protruding lengths.

13. The secondary battery (100) as claimed in claim 4 or 5, wherein each of the first layer (1101) and the third layer (1103) comprises a plurality of electrode plates (111, 112), and more of the first substrate tabs (111a) are disposed as toward the center of the stack.

14. The secondary battery (100) as claimed in any of claims 1 to 13, wherein the case (160) comprises a bottom surface (161) and long and short side surfaces (163) extending upward from the bottom surface (161),
wherein the cap assembly comprises a first terminal plate (143, 153) electrically connected to the first electrode plate (111), and
wherein one of the current collector plates (120, 130) includes a first terminal connecting portion (121) connected to the first terminal plate (143, 153) and a first electrode connecting portion (122) extending from the first terminal connecting portion (121), parallel to the short side surface (163), and coupled to the first electrode plate (111).

15. The secondary battery (100) as claimed in any of claims 1 to 14, wherein each of the second electrode plates (112) includes at least one second substrate tab, and a greater number of the second substrate tabs (112a) are provided on the second electrode plates (112) at the center of the stack than on the second electrode plates (112) at outer portions of the stack.
